# EUROPEAN PATENT APPLICATION

(11) **EP 2 574 497 A1**
(43) Date of publication of application: **03.04.2013**
(21) Application number: 11183589.8
(22) Date of filing: 30.09.2011
(51) Int. Cl.: B60N 2/28

(54) **Belt path selection apparatus**

(71) Applicant: Graco Children's Products Inc., Atlanta, GA 30328 (US)
(72) Inventor: Doolan III, William S., Roswell, GA Georgia 30076 (US)
(74) Representative: Style, Kelda Camilla Karen

(57) **Abstract**

A child car-seat comprising a seat portion moveable between a first configuration and a second configuration; a first path for receiving a safety belt when said child car-seat is in said first configuration, and a second path for receiving said safety belt when said child car-seat is in said second configuration; and wherein said child car-seat is configured to provide an indication to a user which of said first path and said second path to use, dependent upon whether said child car-seat is in said first configuration or said second configuration.

## Description

The present invention relates to a child car-seat.

Since children and babies are too small to use the standard safety belts provided in motor vehicles child car-seats are used to safely restrain babies or children when they are being transported in a motor vehicle. Without a child car-seat an unrestrained child could be thrown about a vehicle in the event of a crash, possibly resulting in death or serious injury.

There are three main ways in which child car-seats can be secured in a motor vehicle. The first is by using an existing vehicle safety belt to hold the child seat in place. To achieve this, the existing vehicle safety belt passes over or through the child car-seat along a "belt-path", before being secured at an existing attachment point for the safety belt. A second known system, which is commonly used in the United States of America, is the LATCH system (Lower Anchors and Tethers for Children system). The LATCH system utilizes a flexible belt similar to a vehicle safety belt to attach to standardized vehicle anchors. A third known system is ISOFIX, in which rigid connectors on the child car-seat attach to standardised connectors on the motor vehicle. ISOFIX is a relatively new system, and therefore many older cars do not have the required connectors for this system.

Child car-seats may be "forward-facing" or "rear-facing".

When installed in a vehicle, an occupant of a rear-facing child seat will face the rear of the vehicle in which they are travelling.

When installed in a vehicle, an occupant of a front-facing child seat will face the front of the vehicle in which they are travelling.

Typically it is recommended that new-born and young babies use rear-facing child-seats, eventually progressing on to front-facing seats. The recommendations for when a child should switch from a rear-facing seat to a front-facing seat vary greatly from region to region. Usually the recommendation is based upon height and weight parameters, rather than age.

"Convertible" child seats are also known which can be converted from a rear-facing configuration to a forward-facing configuration. This saves users the cost of having to buy separate forward-facing and rear-facing child seats.

It is known for such a "convertible" child car-seat to have separate belt paths depending upon whether it is in a forward-facing configuration or a rear-facing configuration.

A problem exists in that a user may not know which belt path to use for the differing configurations. Performance of the seat is significantly degraded if improperly installed, for example by use of the incorrect belt path.

Thus far this problem has been addressed by the use of instructions in the child car-seat instruction manual or the use of labels on the car-seat itself. However such instructions and labels are often overlooked by users, or a user may not understand the instructions or labels. There is therefore a risk that a child car-seat may be incorrectly installed in a vehicle.

An aspect of the present invention provides a child car-seat comprising a seat portion moveable between a first configuration and a second configuration; a first path for receiving a safety belt when said child car-seat is in said first configuration, and a second path for receiving said safety belt when said child car-seat is in said second configuration; and wherein said child car-seat is configured to provide an indication to a user which of said first path and said second path to use, dependent upon whether said child car-seat is in said first configuration or said second configuration.

Preferably said first configuration is one of a forward-facing configuration and a rear-facing configuration, and the second configuration is the other of the forward-facing configuration and the rear-facing configuration.

Preferably when said car-seat is in said first configuration said second path is at least partially blocked.

Preferably when said car-seat is in said first configuration said second path is completely blocked.

Preferably when said car-seat is in said second configuration said first path is at least partially blocked.

Preferably when said car-seat is in said second configuration said first path is completely blocked.

Preferably said car-seat comprises a base portion, said seat portion being reclinable relative to said base portion.

Preferably said blocking is caused by interaction between said seat portion and said base portion.

Preferably said first path is comprised in said seat portion.

Preferably said second path is comprised in said seat portion.

Preferably said seat portion is upright when in said first or second configuration, and said seat portion is reclined when in said other of said first and second configurations.

Preferably said child car-seat comprises a visual aid for providing said indication to said user which of said first and second path to use.

Preferably said visual aid comprises at least one LED.

Preferably said child car-seat comprises an audible aid for indicating to said user which of said first and second path to use.

Preferably said safety belt comprises a vehicle safety belt or a LATCH system belt.

The accompanying drawings, which are incorporated into and constitute part of this disclosure, illustrate preferred embodiments of the invention and serve to explain the principles of the invention.
Figure 1 is an isometric view of a child car-seat;
Figure 2 shows the child car-seat of figure 1 in conjunction with a LATCH system;
Figure 3 is a side-view of the child car-seat of figures 1 and 2 in conjunction with the LATCH system;
Figure 4 is an isometric view showing the child car-seat of figure 1 in a rear-facing configuration;
Figures 5A and 5B are side views of a child car-seat according to an aspect of the present invention, when the child-car seat is in a front-facing configuration;
Figures 6A and 6B are side views of a child car-seat according to an aspect of the present invention, when the child-car seat is in a rear-facing configuration;
Figure 7A is a side-view of a child car-seat according to an aspect of the present invention, when the child car seat is in a forward-facing configuration;
Figure 7B is a side-view of a child car-seat according to an aspect of the present invention, when the child car-seat is in a rear-facing configuration.

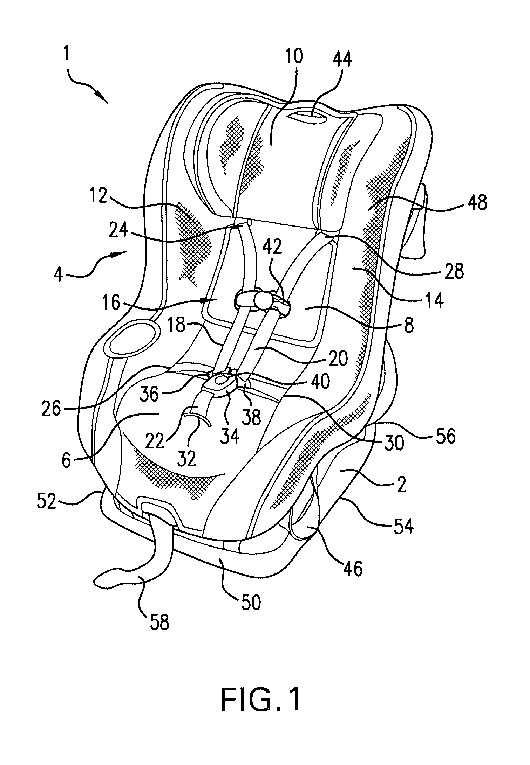

Figure 1 shows an example of a child car-seat 1. The child car-seat 1 comprises a base portion 2 and a seat portion 4. The seat portion 4 is detachable from base portion 2. In an alternative embodiment the seat portion 4 and base portion 2 are not detachable, and in a further embodiment the seat portion 4 and base portion 2 are integrally formed.

The seat portion 4 comprises a leg-support portion 6, back support portion 8, and head support portion 10. The seat portion 4 further comprises lateral support portions 12 and 14.

The seat portion 4 further comprises a harness 16 for securing a child to the seat portion. It should be appreciated that the term "child" also encompasses a baby. The harness 16 comprises belt portions 18, 20 and 22. Belt portion 18 is affixed to the seat portion 4 at points 24 and 26. Belt portion 20 is affixed the seat portion 4 at points 28 and 30. Belt portion 22 is affixed to seat portion 4 at point 32.

In use, belt portion 18 is configured to pass over a child's right shoulder, belt portion 20 is configured to pass over the child's left shoulder, and belt portion 22 is configured to pass between the child's legs.

A buckle 34 is attached to an end of the belt portion 22 opposite from point 32. Belt portion 18 comprises a clasp 36. Belt portion 20 comprises a clasp 38. Both clasps 36 and 38 are configured to be fastened to buckle 34. Clasps 36 and 38 can be released from buckle 34 by pressing release button 40 on buckle 34.

Harness 16 furthermore comprises a chest strap 42. Belt portion 18 passes through one side of chest strap 42, and belt portion 20 passes through an opposite side of chest strap 42. Chest strap 42 is movable in a generally vertical direction (when viewing figure 1) along belt portions 18 and 20. Thus a user can adjust the position of the chest strap 42 dependent on the size of the child.

Seat portion 4 also comprises a headrest adjustment actuator 44 to adjust the height of the headrest and harness for different sized occupants. The seat portion also comprises a front LATCH belt 46.

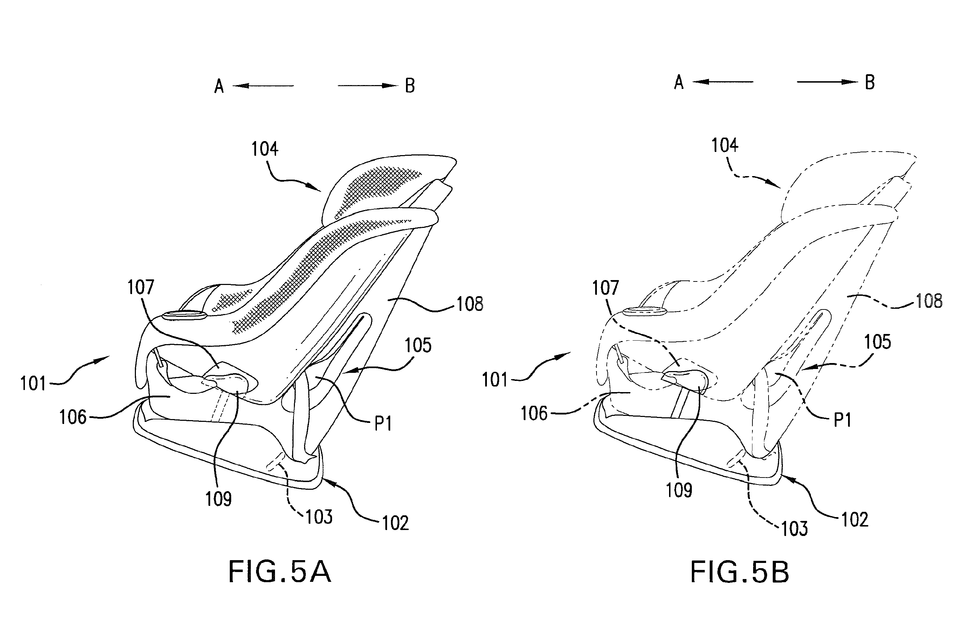

The seat portion 4 comprises a shell (see figures 5A to 7B) over which padded material 48 is provided.

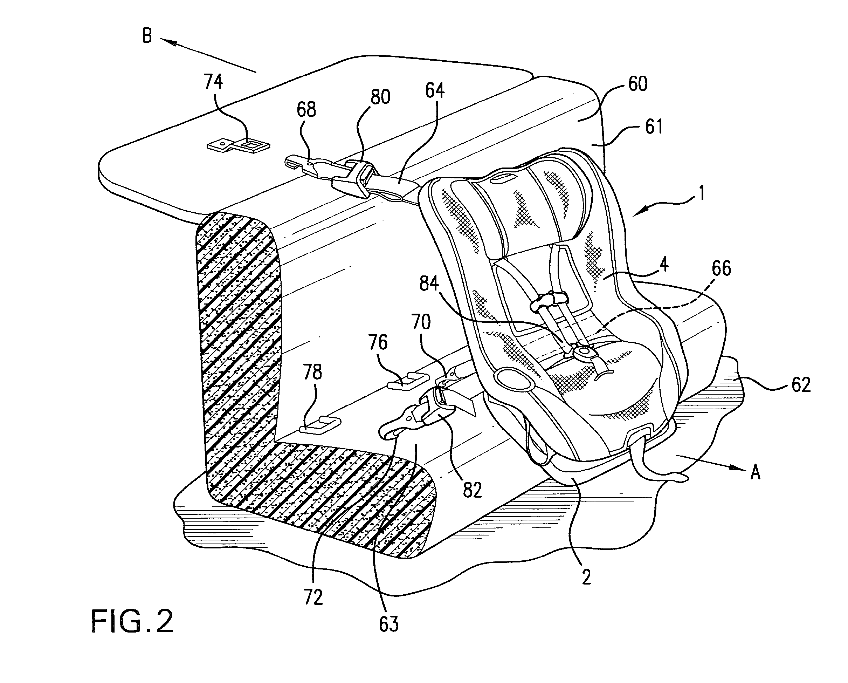

The base portion 2 is configured to rest on an existing vehicle seat (see figure 2), when in use. The base portion 2 comprises a front portion 50, side portions 52 and 54, and a rear portion 56. The base portion 2 comprises a central adjuster 58 for tightening the harness 16 to the occupant.

As discussed above, the car-seat 1 can be placed in either a forward-facing configuration or a rear-facing configuration. When in the forward facing configuration the seat portion 4 will face a front end of a vehicle in which the child car-seat 1 is fitted i.e. an occupant of the child car-seat 1 will face the front of the vehicle. When in the rear-facing configuration the child car-seat 1 will face a rear-end of a vehicle in which the child car-seat 1 is fitted i.e. an occupant of the child car-seat 1 will face a rear-end of the vehicle, or in other words the occupant will face away from the front of the vehicle.

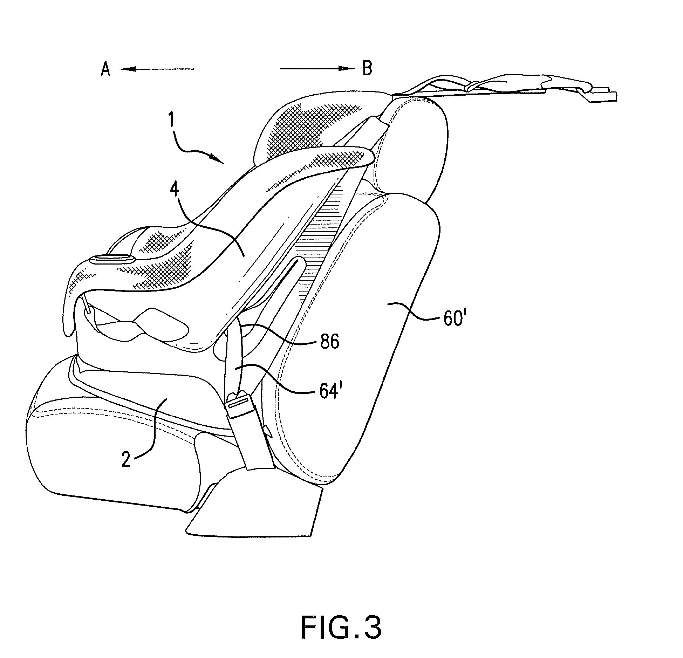

Figures 2 and 3 demonstrate the forward-facing configuration. Items already shown and described in earlier figures are represented with like reference numerals.

Figure 2 is an isometric view of a vehicle seat 60 immediately prior to fitting of the child car-seat 1 in a vehicle 62, in the aforementioned forward-facing configuration. Arrow A indicates a forward facing direction i.e. towards a front end of the vehicle 62. Arrow B indicates a rear facing direction i.e. towards a rear end of the vehicle 62. The vehicle seat 60 comprises a seat back 61 and a seat base 63.

Vehicle seat 60 comprises a LATCH system.

Vehicle 62 comprises anchor portions 74, 76 and 78 of the LATCH system.

The LATCH belt portion comprises a top tether portion 64 and a belt portion 66. Top tether portion comprises an adjuster 80 for adjusting the effective length of top tether portion 64, and belt portion 66 comprises an adjuster 82 for adjusting the effective length of belt portion 66.

Top tether portion 64 is attached to vehicle 62 by attaching attachment portion 68 to anchor portion 74. Belt portion 66 is attached to vehicle 62 by attaching attachment portions 70 and 72 to anchor portions 76 and 78 respectively.

A portion 84 of belt portion 66 follows a belt path through child safety seat 1. The dotted line indicates that the belt path passes through seat portion 4 in a manner such that it is not exposed in the dotted region. The "belt path" is discussed in more detail with respect to figures 5A to 7B.

Figure 3 is a side view of child car-seat 1 attached to a vehicle seat 60'. From this figure it can be appreciated that the belt path passes through an aperture 86 in a side of seat portion 4. Again, the belt path is discussed in more detail with respect to figures 5A to 7B.

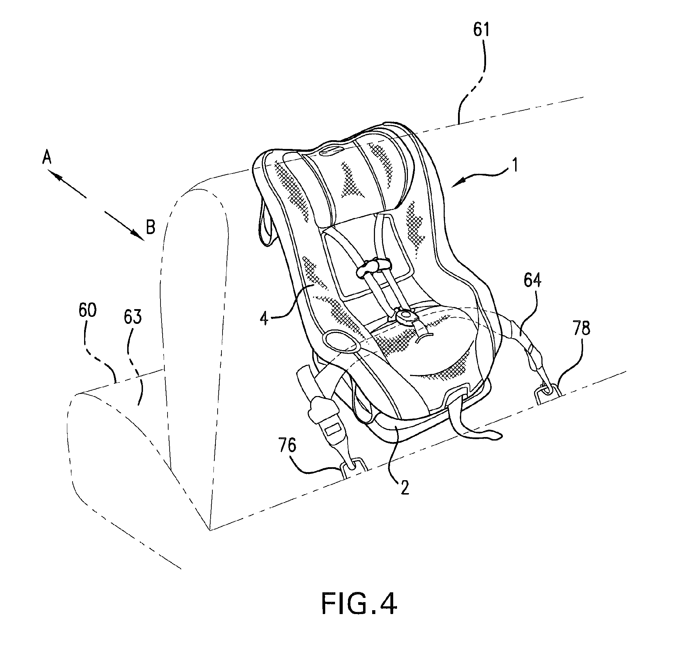

Figure 4 demonstrates the rear-facing configuration.

Figure 4 is an isometric view of child car-seat 1 when in the rear-facing configuration. For the purposes of clarity only, in figure 4 seat back 61 is shown as being transparent. Items already shown and described in earlier figures are represented with like reference numerals.

Figures 5A to 7B show a child car-seat in accordance with an embodiment of the present invention. It should be appreciated that any of the features, alone or in combination, of the child car-seat shown in figures 1 to 4 may be combined with the child car-seat of figures 5A to 7B.

Figure 5A is a side view of a child car-seat 101 according to an embodiment of the present invention. Child car-seat 101 comprises a base portion 102 and a seat portion 104.

In figure 5B seat portion 104 is shown in dotted lines so as to clearly show the interactions between the base portion 102 and the seat portion 104.

The base portion 102 comprises an insert 109. In this embodiment the insert 109 is a detachable item from the base portion 102. However, in an alternative embodiment the insert 109 may be integrally formed with the base portion 102.

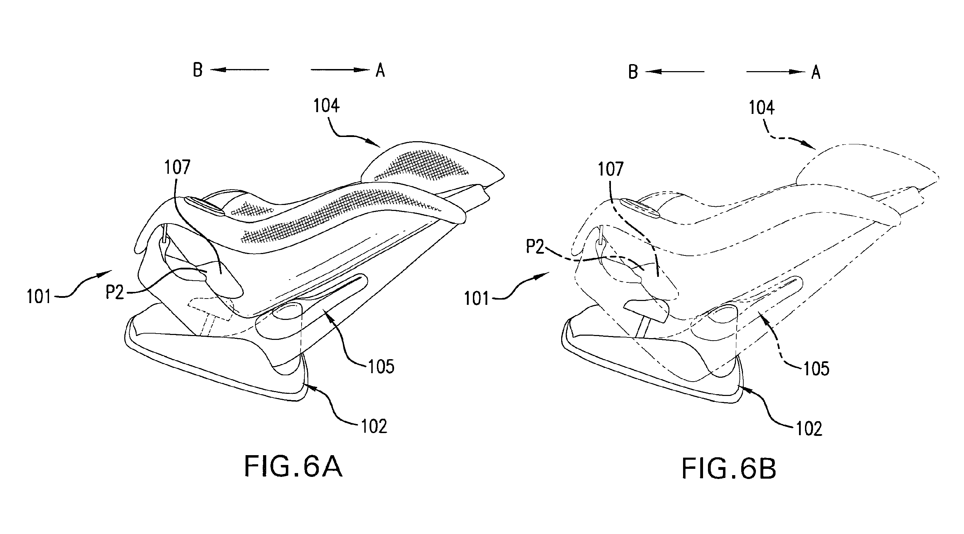

The seat portion 104 is pivotally attached to the base portion 102. A guide track 103 guides the pivoting motion of the seat portion 104 relative to the base portion 102. The seat portion can therefore be reclined between an upright position (forward facing configuration) as shown in figures 5A and 5B to a reclined position (rear-facing configuration) as shown in figures 6A and 6B. The seat portion can also assume any position between the fully upright position shown in figures 5A and 5B and the fully reclined position shown in figures 6A and 6B.

The seat portion 104 comprises a first aperture 105 proximate to a back support portion 108 of the child car-seat 101. The seat portion 104 comprises a second aperture 107 proximate to a leg support portion 106 of the child car-seat 101.

Each of the first and second apertures 105 and 107 are configured to receive a safety belt (not shown) of a vehicle (not shown), or a LATCH belt system, in a manner similar to that shown in figures 2 to 4.

Thus aperture 105 forms a first belt path P1 for a vehicle safety belt, and aperture 107 forms a second belt path P2 (see figures 6A and 6B) for a vehicle safety belt or LATCH belt.

In the embodiment shown the first belt path P1 is the correct belt path for the child car-seat 101 when it is in the forward facing configuration (figures 5A and 5B), and the second belt path P2 is the correct belt path for when the child car-seat 101 when it is in the rear-facing configuration (figures 6A and 6B). Or in other words aperture 105 is intended to receive a vehicle safety belt or LATCH belt when the child car-seat is in the forward facing configuration, and the aperture 107 is intended to receive the vehicle safety belt or LATCH belt when the child car-seat 101 is in the rear-facing configuration.

The upright position of seat portion 104 relative to base portion 102 as shown in figures 5A and 5B is the correct position for when the child car-seat 101 is in the forward facing configuration. In figures 5A and 5B the arrow A denotes the direction towards the front of a vehicle (not shown), and the arrow B denotes the direction towards a rear of the vehicle (not shown).

When in the upright position of figures 5A and 5B, the aperture 105 remains open to receive the vehicle safety belt or LATCH belt as required for the forward facing configuration.

However, it can also be seen from figures 5A and 5B that when in the upright position the second aperture 107 has been partially blocked by the insert 109, thus discouraging a user from inserting the vehicle safety belt or LATCH belt through the second aperture 107. The insert 109 may also be marked with a symbol or text further discouraging a user from inserting a vehicle safety belt or LATCH belt through the second aperture 107 when the seat portion 104 is in the upright position.

In an alternative embodiment (not shown), when the seat portion 104 is in the upright or forward facing configuration the second aperture 107 is fully blocked by the insert 109, thus making it impossible for a user to insert a vehicle safety belt or LATCH belt through the second aperture 107.

Thus embodiments of the present invention prevent a user from putting the vehicle safety belt through the belt path intended for the rear-facing configuration, when the child car-seat 101 is in the forward-facing configuration.

As discussed above, in figures 6A and 6B the child car-seat 101 is shown in a reclined or rear-facing configuration. In figures 6A and 6B the arrow A denotes the direction towards the front of a vehicle (not shown), and the arrow B denotes the direction towards a rear of the vehicle (not shown).

In the configuration of figure 6A and 6B it is shown that aperture 107 is no longer partially or fully blocked by insert 109, such that aperture 107 is configured to receive a safety belt of a vehicle (not shown) or LATCH belt, as required when the child car-seat 101 is in the rear facing configuration.

However, it can also be seen from figures 6A and 6B that when the child car-seat 101 is in the rear facing configuration the interaction between base portion 102 and seat portion 104 has caused the aperture 105 to become partially blocked, thus discouraging a user from attempting to pass a safety belt or LATCH belt through aperture 105.

In an alternative embodiment (not shown), when the seat portion 104 is in the reclined or rear facing configuration the first aperture 105 is fully blocked by the base portion 102, thus making it impossible for a user to insert a vehicle safety belt through the first aperture 105.

Thus embodiments of the present invention prevent a user from putting the vehicle safety belt or LATCH belt through the belt path intended for the forward-facing configuration, when the child car-seat 101 is in the rear-facing configuration.

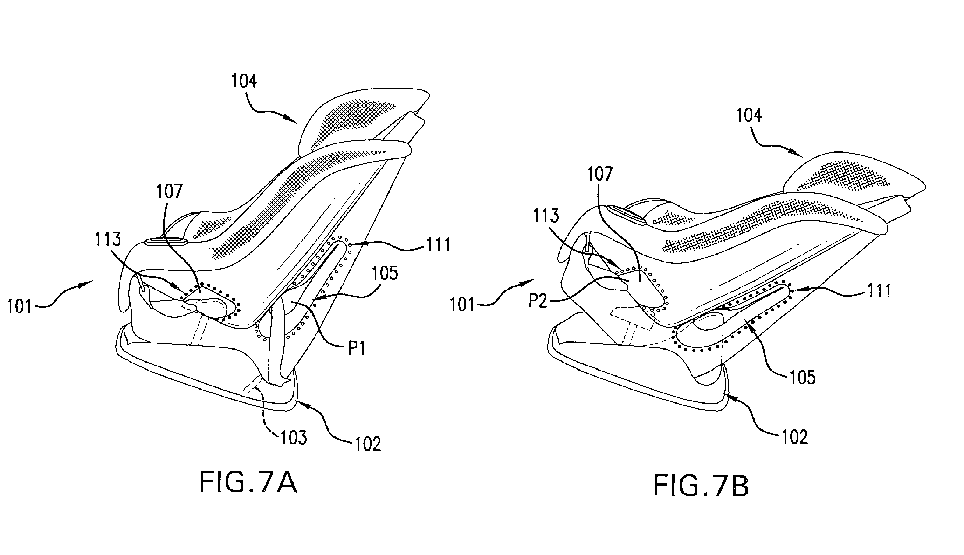

Figures 7A and 7B show a refinement of figures 5A to 6B.

In each of figures 7A and 7B there is shown a first bank of LEDs 111 which surround aperture 105, and a second bank of LEDs 113 which surround aperture 107.

Figure 7A shows the child car-seat 101 in the upright or forward facing configuration, and figure 7B shows the child car-seat 101 in the reclined or rear-facing configuration.

As discussed above, when in the forward-facing configuration (figure 7A) the correct belt path for a vehicle seat belt or LATCH belt to take is belt path P1, through aperture 105.

In the embodiment of figure 7A, the LEDs 111 are illuminated in a manner to indicate that the vehicle seat belt should follow belt path P1, through aperture 105. Preferably, the LEDs 111 are illuminated green. LEDs 113 are illuminated in a manner to indicate that the vehicle seat belt should not be inserted through aperture 107. Preferably the LEDs 113 are illuminated red.

Thus a user is given a clear visual indication as to which belt path to use when the child car-seat 101 is in the forward facing configuration.

As discussed above, when in the rear-facing configuration (figure 7B) the correct belt path for a vehicle seat belt to take is belt path P2, through aperture 107.

In the embodiment of figure 7B, the LEDs 113 are illuminated in a manner to indicate that the vehicle seat belt is to follow belt path P2, through aperture 107. Preferably, the LEDs 113 are illuminated green. LEDs 111 are illuminated in a manner to indicate that the vehicle seat belt should not be inserted through aperture 105. Preferably the LEDs 111 are illuminated red.

Thus a user is given a clear visual indication as to which belt path to use when the child car-seat 101 is in the rear facing configuration.

In one embodiment, each bank of LEDs 111 and 113 comprises alternating green and red LEDs. When in the configuration of figure 7A, the green LEDs of bank 111 will illuminate, and the red LEDs of bank 111 will not illuminate. Likewise the red LEDs of bank 113 will illuminate, and the green LEDs of bank 113 will not illuminate.

When in the configuration of figure 7B, the green LEDs of bank 113 will illuminate, and the red LEDs of bank 113 will not illuminate. Likewise the red LEDs of bank 111 will illuminate, and the green LEDs of bank 111 will not illuminate.

Although the embodiments of figures 7A and 7B show a specific configuration of the LEDs 111 and 113, many variations are envisaged. For example each bank of LEDs 111 and 113 may comprise any number of LEDs. The manner in which each bank of LEDs is illuminated may also be varied. For example the illumination of each bank may be "solid" (i.e. not flashing), or may be flashing, or each LED may be illuminated sequentially. Where the LEDs are illuminated sequentially this may occur in a clockwise or anti-clockwise direction. The colour of the LEDs may also be varied. In another embodiment one bank of LEDs may be illuminated to show the correct belt path for the given car-seat configuration, whilst the other other bank of LEDs remains unilluminated. The alternative is also envisaged, that is the LEDs surrounding the correct belt path for the given configuration may be unilluminated, whilst the other bank of LEDs is illuminated.

In another embodiment (not shown), audio means is provided to indicate to a user the correct belt path for a given configuration of the child car-seat 101. The audio means may be in the form of a speaker or speakers (not shown). The audio means may play any number of sounds to indicate the correct belt path to use, for example a "buzzing" or "bleeping" noise. Alternatively the audio means can play back a pre-recorded message.

Thus embodiments of the present invention provide real-time information to a user as to which belt-path to use, dependent upon the configuration of the child car-seat.

The above description describes some specific embodiments of the present invention. The specific embodiments are to be considered exemplary and not limiting to the scope of the appended claims. Variations may be made to the described embodiments whilst remaining within the scope of the appended claims.

For example the belt paths P1 and P2 are, in the described embodiments, formed of separate apertures. In another embodiment (not shown), the belt paths P1 and P2 may be different portions of a single aperture. The belt paths need not even be apertures. They could for example be guides or any other means for directing a vehicle safety belt or LATCH belt system.

Any of the features of the described embodiments may be combined or used alone. For example the LEDs of figures 7A and 7B could be used without the blocking means described in detail in figures 5A to 6B, and vice versa. Likewise the audio means described above can be used alone or in combination with either or both of the LEDs and/or blocking means.

Furthermore, in the described embodiments the invention is shown as applicable to differentiating between the appropriate belt paths for forward facing and rear facing configurations. However the invention is not limited to this. For example the invention may also relate to differentiating between appropriate belt paths for any other purpose. For example, different belt paths may be needed for differing recline angles when the child car-seat is in either of the forward and rear facing configurations.

## Claims

1. A child car-seat comprising:
a seat portion moveable between a first configuration and a second configuration;
a first path for receiving a safety belt when said child car-seat is in said first configuration, and a second path for receiving said safety belt when said child car-seat is in said second configuration;
and wherein said child car-seat is configured to provide an indication to a user which of said first path and said second path to use, dependent upon whether said child car-seat is in said first configuration or said second configuration.

2. A child car-seat as set forth in claim 1, wherein said first configuration is one of a forward-facing configuration and a rear-facing configuration, and the second configuration is the other of the forward-facing configuration and the rear-facing configuration.

3. A child car-seat as set forth in claim 1 or claim 2, wherein when said car-seat is in said first configuration said second path is at least partially blocked.

4. A child car-seat as set forth in any preceding claim, wherein when said car-seat is in said first configuration said second path is completely blocked.

5. A child car-seat as set forth in any preceding claim, wherein when said car-seat is in said second configuration said first path is at least partially blocked.

6. A child car-seat as set forth in any preceding claim, wherein when said car-seat is in said second configuration said first path is completely blocked.

7. A child car-seat as set forth in any preceding claim, wherein said car-seat comprises a base portion, said seat portion being reclinable relative to said base portion.

8. A child car-seat as set forth in claim 7 when dependent upon any of claims 3 to 6, wherein said blocking is caused by interaction between said seat portion and said base portion.

9. A child car-seat as set forth in any preceding claim, wherein said first path is comprised in said seat portion.

10. A child car-seat as set forth in any preceding claim, wherein said second path is comprised in said seat portion.

11. A child car-seat as set forth in any preceding claim, wherein said seat portion is upright when in said first or second configuration, and said seat portion is reclined when in said other of said first and second configurations.

12. A child car-seat as set forth in any preceding claim, comprising a visual aid for providing said indication to said user which of said first and second path to use.

13. A child car-seat as set forth in claim 12, wherein said visual aid comprises at least one LED.

14. A child car-seat as set forth in any preceding claim, comprising an audible aid for indicating to said user which of said first and second path to use.

15. A child car-seat as set forth in any preceding claim, wherein said safety belt comprises a vehicle safety belt or a LATCH system belt.
